# EUROPÄISCHE PATENTSCHRIFT

(11) **EP 2 352 579 B1**
(45) Veröffentlichungstag und Bekanntmachung des Hinweises auf die Patenterteilung: **09.11.2016**
(21) Anmeldenummer: 09776796.6
(22) Anmeldetag: 20.06.2009
(51) Int. Cl.: B01J 2/16

(54) **VERFAHREN UND VORRICHTUNG ZUR BEHANDLUNG VON FEINKÖRNIGEM MATERIAL IN EINER STRAHLSCHICHT**
METHOD AND APPARATUS FOR THE TREATMENT OF FINE-GRAINED MATERIAL IN A SPOUTED BED
PROCÉDÉ ET DISPOSITIF DE TRAITEMENT DE MATIÈRE À GRAIN FIN EN LIT JAILLISSANT

(30) Priorität: 11.09.2008 DE 102008046772
(43) Veröffentlichungstag der Anmeldung: 10.08.2011
(73) Patentinhaber: Glatt Ingenieurtechnik GmbH, 99427 Weimar (DE)
(72) Erfinder: JACOB, Michael, 99427 Weimar (DE); RÜMPLER, Karlheinz, 99425 Weimar (DE); OHLENDORF, Frank, 99198 Kerspleben (DE); KLÖPPEL, Tilo, 99425 Weimar-Taubach (DE)
(74) Vertreter: Kunst, Manuel Nikolaus Johannes
(86) Internationale Anmeldenummer: PCT/EP2009/004473
(87) Internationale Veröffentlichungsnummer: WO 2010/028710

(56) Entgegenhaltungen:
- WO-A1-02/100527
- DE-A1- 4 304 405
- DE-A1- 10 322 062
- DE-U1-202005 003 791
- US-A- 4 372 228

## Beschreibung

Die Erfindung betrifft ein Verfahren zur Behandlung von feinkörnigem Material in einer Strahlschicht und eine dazugehörige Vorrichtung.

In der US 4,372,228 A wird ein Wirbelschichtapparat beschrieben, der als wesentliches Element ein konisches Unterteil (Anströmteil) enthält. Dieses ist durch eine abwärts zentral in die Mitte führende Geometrie charakterisiert. In dieser abwärts führenden Geometrie sind Gasdüsen integriert, die zur. Druckluftzuführung dienen. In der US 4,372,228 A wird die Führung der Druckluftströmung entlang der abwärts führenden Oberflächen angestrebt. Durch die unterschiedlichen Ausführungsformen wird das alleinige ziel verfolgt, Feststoffe, wie z. B. Agglomerate, durch eine Art Blaswirkung in Richtung eines zentralen Austrages zu fördern. Auch in der in Fig. 3 der US 4,372,228 A dargestellten Ausführung, wo ein zentraler Konus oberhalb des Austrags angeordnet ist, wird Druckluft oder ein anderes Gas entlang der Konuswandung nach unten eingeblasen. Charakteristisch für alle in der US 4,372,228 A vorbeschriebenen Ausführungen ist, dass ein Feststoff in einem Wirbelschichtapparat durch wandnahe Strömungen in Bewegung gesetzt wird. Diese wandnahen Strömungen, deren Strömungsrichtung parallel zu den konischen Elementen in der US 4,372,228 A als wesentliches Merkmal beschrieben wird, dienen allein dazu, Feststoffe in Richtung eines Feststoffaustrages zu fördern. Die Feststofffüllung selbst wird dabei nicht als Ganzes gezielt fluidisiert. In der US 4,372,228 A wird das Hauptaugenmerk auf eine Gasführung horizontal bzw. nach unten gerichtet in einen Prozessraum gelegt. Vertikale Gasströmungen jeglicher Art werden in der US 4,372,228 A demgegenüber nicht angestrebt.

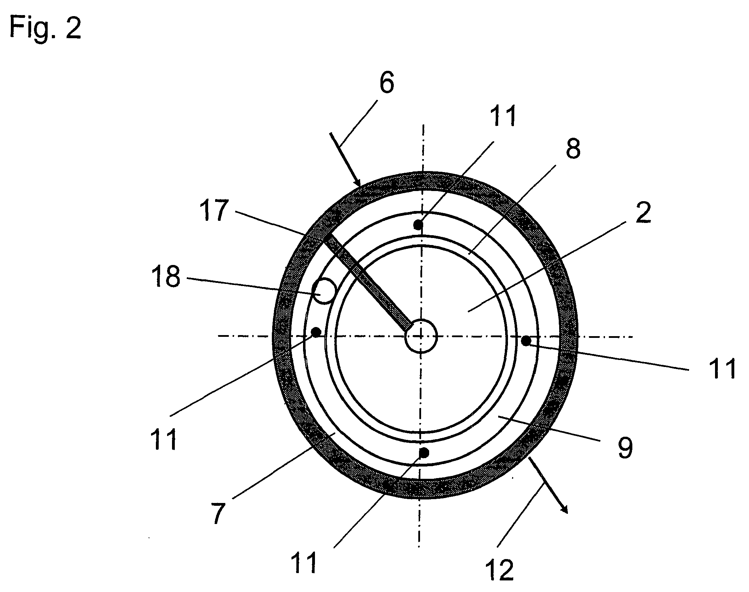

Aus der DE 43 04 405 A1 ist ein kontinuierliches Agglomerationsverfahren vorbekannt, das im Wesentlichen auf einer speziellen Ausführung bzw. Betriebsart einer Dreistoffdüse beruht. Dabei wird im Zentrum der Dreistoffdüse die als Bindemittel dienende Granulierflüssigkeit zugeführt und gleichzeitig über einen zusätzlichen Ringspalt der Sprühdüse ein pulverförmiger Feststoff eingeblasen. Dadurch wird die Granulierflüssigkeit mit dem Pulver im Sprühstrahl zusammengeführt, um ein Verfestigen des Pulvers zu Agglomeraten zu bewirken. Das Wirbelbett wird durch Fluidisierung über einen konischen Anströmboden erzeugt. Dieser Anströmboden besteht - wie allgemein üblich - aus einem porösen Medium oder einer perforierten Platte bzw. einem gasdurchlässigen Gewebe. Das in der Abbildung 2 der DE 43 04 405 A1 dargestellte Einlaufwehr ist im Zusammenhang mit dem Windsichter zu sehen und stellt keinen Verdrängungskörper dar. Der Einlaufwehr dient vielmehr dazu, den Feststoff zum Sichterspalt zu leiten. Die Jalousie dient nur zur Verstellung der Sichtereintrittsfläche, während die in der Fig. 2 angedeutete und im Text beschriebene Feststoffzirkulation sich nicht oder nur unter bestimmten Bedingungen wie dargestellt ausbilden kann. Der in DE 43 04 405 A1 vorbeschriebenen Apparat besitzt eine zentrale Düse; in der Sprühzone, die bei Bedarf durch das Mischrohr eingegrenzt werden kann, wird durch die Düsensprüh- bzw. treibluft Feststoff aus der Sprühzone punktuell noch oben geblasen und fällt in die umliegenden Außenbereiche der Wirbelschicht zurück. Diese Strömungsform wird in der Literatur auch als Sprudel-, Fontainen- oder manchmal auch als Strahlschicht bezeichnet. Eine Zuluftführung des für die Trocknung benötigten Prozessluftstromes durch Ringspalte in den Prozessraum hinein gibt es demgegenüber nicht. Ausschließlich die Verdüsungs- und pulverführende Treibluft wird durch Ringspalte innerhalb der Treibstoffdüse geführt.

In der WO 02/100527 A1 ist eine Vorrichtung zum Behandeln von partikelförmigen Gut, mit einer Prozesskammer zum Aufnehmen und zum Behandeln des Gutes offenbart. Der Boden der Prozesskammer ist dabei aus überlappenden, horizontal ausgerichteten Leitplatten aufgebaut. Zwischen den Leitplatten sind dabei Schlitze ausgebildet, über welche oppositere Prozessluftströmungen in die Prozesskammer einströmen und im Bereich einer Aufbruchzone aufeinander treffen und in eine nach oben gerichtete vertikale Strömung umgelenkt werden. Die Schlitze sind dabei derart angeordnet, dass die zwei aufeinander zugerichteten Strömungen längs einer Aufbruchzone aufeinandertreffen.

Aus der DE 103 22 062 A1 ist ein Verfahren und eine Vorrichtung zur Aufbringung von Flüssigkeiten in eine Feststoffströmung eines Strahlschichtapparates bekannt. Diese Strahlschichtapparate sind u.a. dadurch gekennzeichnet, dass sie mit einem rechteckigen Reaktionsraum und zwangsläufig in axialer Richtung des Reaktionsraumes angeordneter Gasanströmeinrichtung in einfacher oder doppelter Ausführung ausgestattet sind. Bei mehreren Reaktionsräumen sind diese untereinander durch einen Materialüberlauf verbunden. Im Falle der Eindüsung von Flüssigkeiten sind die notwendigen Düsen zentral im Strahlschichtapparat angeordnet. Die Gasanströmeinrichtung ist regelbar ausgeführt, um die Menge und Strömungsgeschwindigkeit der Prozessluft zu variieren. Dieses Verfahren und die entsprechenden Vorrichtungen zeichnen sich durch eine lineare Ausrichtung der Gasanströmeinrichtung aus.

Nachteilig bei derartigen Verfahren und Vorrichtungen ist, dass hohe Anforderungen an die Fertigungsgenauigkeit der Gasanströmeinrichtung bestehen, um eine gleichmäßige Anströmung über die gesamte Apparatelänge zu gewährleisten. Weiterhin ist die Längsausdehnung der Vorrichtung begrenzt, wodurch gezwungener Maßen eine Umlenkung des Materialstromes mittels des Materialüberlaufes erfolgt. Außerdem entsteht durch die Längenausdehnung eine große Anlagengeometrie, die eine Verteuerung der Anlage zur Folge hat.

Aus der DE 31 17 892 A1 ist ein Strahlschichtapparat zur Herstellung von Granulaten bekannt, bei dem eine Flüssigkeit in die Feststoffströmung des Strahlschichtgranulators eingebracht wird. Der Strahlschichtapparat weist einen runden Querschnitt auf, dessen unterer Teil konisch verengt ausgebildet ist. In den zentralen konischen Teil des Strahlschichtgranulators mündet ein Gaskanal, in dem eine Düse zum Eindüsen der Flüssigkeit angeordnet ist . Durch den Gaskanal wird ein entsprechendes Gas zur Aufrechterhaltung der Strahlschicht zugeführt. Das zentral zugeführte Gas reißt die über die Düse eingebrachte Flüssigkeit und ein Teil des im Strahlschichtgranulator befindlichen Materials mit, wobei ein Strahlkanal entsteht, in dem die Materialteilchen mit der Flüssigkeit benetzt werden. Über den konusförmigen Boden wird das besprühte Material wieder dem Strahlkanal zugeführt, so dass es zu einem Partikelumlauf kommt. Nach Erreichen einer entsprechenden Granulatgrösse werden diese aus dem Strahlschichtgranulator ausgetragen.

Nachteilig bei dieser Art von Strahlschichtapparaten ist, dass mit einer derartigen Apparatur eine gleichmäßige Benetzung der Materialteilchen mit Flüssigkeit problematisch ist und dass darüber hinaus bei Anlagen für hohe Durchsätze Probleme hinsichtlich der Erzeugung und Aufrechterhaltung der Strahlschicht bestehen.

Stand der Technik ist fernerhin die Anwendung der Wirbelschichttechnik in Apparaten mit kreisrunder Geometrie des Wirbelbodens und des gesamten Apparates zur Trocknung, Sprühgranulation, Agglomeration oder zum Coating, wobei die Prozesse sowohl chargenweise oder auch kontinuierlich durchgeführt werden können.

Aufgabe der Erfindung ist es, ein Verfahren und eine dazugehörige Vorrichtung zur Behandlung von feinkörnigem Material in einer Strahlschicht zu schaffen, mit dem bzw. mit der die Nachteile des Standes der Technik beseitigt werden und mit dem bzw. mit der unterschiedliche Prozessbedingungen im Prozessraum regelbar einstellbar sind und deren Anlage einen einfachen und kostengünstigen Aufbau aufweist.

Diese Aufgabe wird erfindungsgemäß für das Verfahren durch die Merkmale des Patentanspruches 1 und für die Vorrichtung durch die Merkmale des Patentanspruches 6 gelöst.

Dadurch, dass in einem runden Strahlschichtapparat das Fluidisierungsmittel als Gasstrom über zwei voneinander beabstandete und in ihrer Größe einstellbare Ringspalte zugeführt wird, wobei über den äußeren Ringspalt eine kegelringförmig sich in Richtung der äußeren Prozesswand erweiternde und über den inneren Ringspalt eine kegelringförmige, sich in Richtung der Mittellinie des Prozessraumes erweiternde Gasströmung erzielt wird, wird eine für Strahlschichten typische Materialbewegung des in dem Prozessraum zu behandelnden Materials erreicht. Die erfindungsgemäße Vorrichtung besteht dabei aus einem zentral im unteren Bereich des Prozessraums angeordneten und in den Prozessraum hineinreichenden Verdrängungskörper, um den beabstandet davon eine ringförmige Mittelkontur angeordnet ist. Durch die Anordnung des Verdrängungskörpers in Verbindung mit der ringförmigen Mittelkontur und der Innenkante des Prozessraumes wird ein innerer und äußerer Ringspalt gebildet, durch dessen jeweiligen Spalt der Gasstrom als Fluidisierungsmittel zugeführt wird. Dabei wird die Gasanströmeinrichtung verstellbar ausgeführt, um die Variation der Menge bzw. der Strömungsgeschwindigkeit zu gewährleisten. Dieses erfolgt durch jeweils eine Anordnung einer Verstelleinrichtung unterhalb des Verdrängungskörpers und der ringförmigen Mittelkontur.

Die Vorteile des erfindungsgemäßen Verfahrens bestehen in einer einfachen und sicheren Prozessführung, bei der die für die Behandlung des Materials notwendigen Prozessbedingungen regelbar eingestellt werden können. Der vorteil der erfindungsgemäßen Vorrichtung besteht in einer einfachen Konstruktion und einer einfachen Fertigung der weitestgehend rotationssymmetrischen Bauteile. Durch die runde Bauform des Strahlschichtapparats wird ein geringer Platzbedarf benötigt. Gleichzeitig wird dadurch auch die Apparatemasse verringert.

Weitere vorteilhafte Ausgestaltungen sind in den Unteransprüchen beschrieben, - sie werden in der Beschreibung zusammen mit ihrer Wirkung erläutert.

Die Erfindung wird nachfolgend anhand von Ausführungsbeispielen näher erläutert. In den dazugehörigen Zeichnungen zeigen:
- Fig. 1:: einen erfindungsgemäßen Strahlschichtapparat im Schnitt und
- Fig. 2:: einen Schnitt A-A gemäß Figur 1.

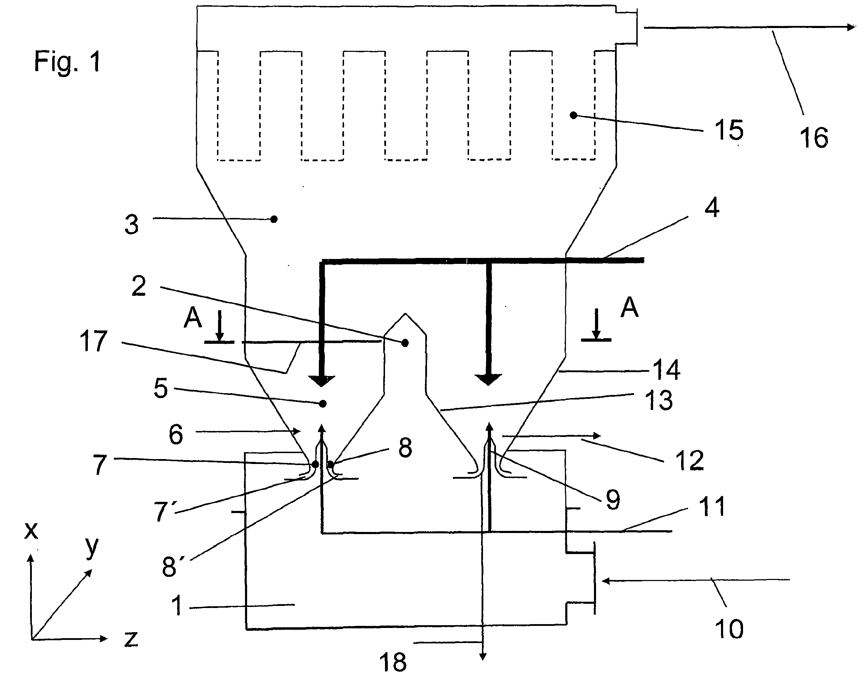

Der in der Figur 1 dargestellte Strahlschichtapparat weist eine runde Bauform auf und besteht aus einem Prozessraum 5, der einen zylindrisch und einen konisch nach unten verengenden Abschnitt aufweist. Oberhalb des Prozessraums 5 ist ein sich konisch erweitender Expansionsraum 3 angeordnet. Unterhalb des Prozessraumes 5 ist eine Zuluftkammer 1 zur Zuführung eines Fluidisierungsmittels in den Prozessraum 5 angeordnet. Mit 10 ist der Fluidisierungsmitteleintritt in die Zuluftkammer 1 gekennzeichnet. In der Regel ist das Fluidisierungsmittel ein Gasstrom, der entsprechend der durchzuführenden Materialbehandlung im Prozessraum 5 temperiert wird.

Die Begrenzung des Prozessraums 5 erfolgt von unten durch einen zentral mittig angeordneten Verdrängungskörper 2 und einer im Abstand zu dem Verdrängungskörper 2 angeordneten, kreisringförmig ausgebildeten Mittelkontur 9. Der rotationssymmetrisch ausgebildete Verdrängungskörper 2 und die Mittelkontur 9 sind dabei so ausgeführt, dass ihre Kontur in den Prozessraum 5 hineinragt. Der Verdrängungskörper 2 ist in Richtung des Prozessraumes 5 hineinragend und in x-Richtung konisch verengend ausgebildet, an den sich ein zylindrisch ausgebildeter Teil anschließen kann. Durch die Anordnung des Verdrängungskörpers 2 erhält der Prozessraum 5 eine ringförmige Grundfläche. Von der ringförmigen Grundfläche erweitert sich der Prozessraum 5 in Richtung x-Achse einerseits durch eine sich nach Außen erweiternde konische Außenkontur 14 und andererseits durch die sich nach Innen erweiternde Kontur 13 des Verdrängungskörpers 2.

Die Mittelkontur 9 ist so ausgebildet, dass ihr äußerer Umfang unter Bildung eines Spaltes 7' unterhalb der Außenkante des Prozessraums 5 und ihr innerer Umfang unter Bildung eines Spaltes 8' unterhalb der Außenkante der Mittelkontur 2 angeordnet ist. Die jeweilige Spaltbreite erstreckt sich dabei, wie in Figur 1 ersichtlich, in der x-Richtung. Unterhalb des Verdrängungskörpers 2 und der Mittelkontur 9 ist jeweils eine nicht dargestellte Verstelleinrichtung zur jeweiligen Verstellung der Spaltbreite 7' und/oder 8' angeordnet.

Der Verdrängungskörper 2 und die Mittelkontur 9 sind derart angeordnet, dass zwischen dem Verdrängungskörpers 2 und der Innenkontur der ringförmigen Mittelkontur 9 ein innerer Ringspalt 7 und zwischen der Außenkontur der ringförmigen Mittelkontur 9 und der unteren Außenkante des Prozessraums 5 ein äußerer Ringspalt 8 zur Zuführung des Fluidisierungsmittels gebildet wird.

Innerhalb des Prozessraums 5 ist eine Trennwand 17 angeordnet, die sich von der äußeren Innenwand des Prozessraums 5 bis zur Kontur des Verdrängungskörpers 2 erstreckt. Im zylindrischen Bereich des Expansionsraums 3 ist ein an sich bekanntes Entstaubungssystem 15 und ein Fluidisierungsmittelaustritt 16 angeordnet. In der Außenkontur 14 des Prozessraums 5 ist ein Feststoffeintrag 6 für das im Prozessraum 5 zu behandelnde Material angeordnet. Der Austrag des im Prozessraum 5 behandelten Materials erfolgt über einen in der konischen Außenkontur 14 angeordneten Feststoffaustrag 12 und/oder über ein oder mehrere in der ringförmigen Mittelkontur 9 angeordnete Feststoffausträge 18.

Zur Bedüsung des in dem Prozessraums 5 befindlichen Materials mit einer Flüssigkeit sind ein oder mehrere Sprühdüsen angeordnet. Die Bedüsung des Materials kann dabei von oben und/oder von der Seite und/oder von unten erfolgen. Eine Bedüsung von unten in x-Richtung erfolgt durch ein oder mehrere in der ringförmigen Mittelkontur 9 angeordnete Sprühdüsen 11. Eine Bedüsung von oben erfolgt durch die auf die Materialschicht sprühenden Flüssigkeitseindüsungen 4. Eine seitliche Eindüsung erfolgt durch eine oder mehrere nicht dargestellte Düsen, die die Außenwandung des Prozessraums 5 durchdringen.

Das in dem Prozessraum 5 zu behandelnde Material wird durch die über den äußeren 7 und inneren Ringspalt 8 zugeführte Gasströmung fluidisiert. Durch die sich dabei ausbildenden beiden kegelringförmigen einerseits nach Außen und andererseits nach Innen in den Prozessraum 5 erweiternden Fluidisierungsbereiche wird erreicht, dass das in diesem Bereich befindliche Material die für Strahlschichten typischen Materialbewegungen vollzieht. Unerstützt wird das zusätzlich dadurch, dass die Gasgeschwindigkeit der kegelringförmig ausgebildeten Gasströmungen, die über den äußeren Ringspalt 7 zugeführt wird, in einer jeweiligen y-z Ebene im Bereich kleiner Durchmesser größer ist als im Bereich der größeren Durchmesser und die Gasgeschwindigkeit der kegelringförmig ausgebildeten Gasströmungen, die über den inneren Ringspalt 8 zugeführt werden, in einer jeweiligen y-z Ebene im Bereich kleiner Durchmesser kleiner ist als im Bereich der größeren Durchmesser.

Bei Einsatz einer Trennwand 17 wird der Fluidisierungsbereich des Materials im Prozessraum 5 getrennt. Wie aus Figur 2 ersichtlich, ist ausgehend von der Trennwand 17 bei einem Winkelmaß von ca. 10° der Feststoffeintrag 6 für disperse oder pulverförmige Feststoffe angeordnet. Das zu behandelnde Material durchläuft den Fluidisierungsbereich des Prozessraums 5 des Strahlschichtapparates bezogen auf die y-z Ebene, kreisförmig, wobei das Material durch die Düsen 4 und/oder 11 benetzt und durch das Fluidisierungsmedium getrocknet wird, bis es schließlich durch den Feststoffaustrag 18, zum Beispiel im Winkelmaß von ca. 350°, aus dem Prozess ausgetragen wird.

In dem, über dem Prozessraum 5 angeordneten Expansionsraum 3 erfolgt eine Geschwindigkeitsabsenkung der über die Ringspalte 7 und 8 zugeführten Gasströmung, wodurch eine Abscheidung von mitgerissenen Partikeln erfolgt. Durch das Entstaubungssystem 15 wird der mitgerissene Staub vom Luftstrom getrennt und in den Fluidisierungsbereich wieder zurück geführt.

Der in der y-z Ebene gesehene kreisförmige Materialtransport in dem Prozessraum 5 wird unterstützt durch die getrennt einstellbare Spaltbreite 7' und 8'. Damit können über den inneren Ringspalt 8 und den äußeren Ringspalt 7 unterschiedliche Gasgeschwindigkeiten und Gasmengen des Fluidisierungsmittels eingestellt werden. Durch eine entsprechende Konturausbildung der Spalte 7; 7' und 8; 8' kann bei einer Spaltbreitenverstellung gleichzeitig die Einströmrichtung des Gasstromes beeinflusst werden. Zusätzlich kann die Materialbewegung im Prozessraum 5 durch Leiteinrichtungen beeinflusst werden, die innerhalb des Prozessraums 5 an der konischen Innenwand 14 und/oder an der konischen Kontur 13 des Verdrängungskörpers 2 und/oder an der in den Prozessraum 5 ragende Mittelkontur 9 angeordnet sind.

Eine weitere Beeinflussung der Materialbehandlung im Prozessraum 5 kann durch eine segmentierte Gestaltung der Zuluftkammer 1 erfolgen. Über die entsprechenden Segmente kann über den Umfang der kreisförmigen Ringspalte 7 und 8 das Fluidisierungsmittel mit unterschiedlicher Temperatur und/oder Gasgeschwindigkeit und/oder Gasmenge zugeführt werden. Zur Segmentierung sind in der Zuluftkammer 1 entsprechende Trennwände angeordnet.

Zusammenfassend ist also folgendes festzuhalten:
Die Erfindung betrifft ein Verfahren und eine dazugehörige Vorrichtung zur Behandlung von feinkörnigem Material in einer Strahlschicht.

Aufgabe der Erfindung ist es, ein Verfahren und eine dazugehörige Vorrichtung zur Behandlung von feinkörnigem Material in einer Strahlschicht zu schaffen, mit dem bzw. mit der die Nachteile des Standes der Technik beseitigt werden und mit dem bzw. mit der unterschiedliche Prozessbedingungen im Prozessraum regelbar einstellbar sind und deren Anlage einen einfachen und kostengünstigen Aufbau aufweist.

Das erfindungsgemäße Verfahren ist dadurch gekennzeichnet, dass in dem Prozessraum 5 über einen in der y-z Ebene liegenden äußeren, Ringspalt 7 eine nahezu kreisringförmige und in Richtung x-Achse sich im Prozessraum 5 nach Außen im Durchmesser erweitende und über einen in der y-z Ebene liegenden inneren Ringspalt 8 eine nahezu kreisringförmige und in Richtung x-Achse sich im Prozessraum 5 nach Innen im Durchmesser erweitende Gasströmung des Fluidisierungsmittels erzeugt wird.

Die erfindungsgemäße Vorrichtung ist dadurch gekennzeichnet, dass in dem unteren Bereich des Prozessraums 5 zentral ein Verdrängungskörper 2 und eine ringförmige Mittelkontur 9 derart angeordnet sind, dass zwischen dem Verdrängungskörpers 2 und der Innenkontur der ringförmigen Mittelkontur 9 ein innerer Ringspalt 7 und zwischen der Außenkontur der ringförmigen Mittelkontur 9 und der unteren Außenkante des Prozessraums 5 ein äußerer Ringspalt 8 zur Zuführung des Fluidisierungsmittels gebildet wird.

## Patentansprüche

1. Verfahren zur Behandlung von feinkörnigem Material in einer Strahlschicht, bei dem ein Fluidisierungsmittel von unten einem zylindrischen und nach unten konisch ausgebildeten Prozessraum zur Erzeugung und Aufrechterhaltung einer Strahlschicht zugeführt wird, wobei in dem Prozessraum (5) über einen in der y-z Ebene liegenden äußeren Ringspalt (7) eine nahezu kreisringförmige und in Richtung x-Achse sich im Prozessraum (5) nach Außen im Durchmesser erweiternde und über einen in der y-z Ebene liegenden inneren Ringspalt (8) eine nahezu kreisringförmige und in Richtung x-Achse sich im Prozessraum (5) nach Innen im Durchmesser erweiternde Gasströmung des Fluidisierungsmittels erzeugt wird, wobei das zu behandelnde Material in dem Prozessraum (5) von oben und/oder von unten und/oder von der Seite an einer oder mehreren Stellen durch Eindüsung mit einer Flüssigkeit besprüht wird, und wobei die Einströmrichtung der über den äußeren (7) und inneren Ringspalt (8) zugeführten Gasströmung durch Einstellung einer Spaltbreite einstellbar ist, wobei eine ringförmige Mittelkontur (9) und ein Verdrängungskörper (2) durch jeweils eine Verstelleinrichtung in der x-Achse zur Einstellung der Größe eines Spaltes (7') und (8') verstellbar sind.

2. Verfahren nach Anspruch 1, **dadurch gekennzeichnet, dass** die Gasgeschwindigkeit der kegelringförmig ausgebildeten Gasströmungen, die über den äußeren Ringspalt (7) zugeführt wird, in einer jeweiligen y-z Ebene im Bereich kleiner Durchmesser größer ist als im Bereich der größeren Durchmesser und die Gasgeschwindigkeit der kegelringförmig ausgebildeten Gasströmungen, die über den inneren Ringspalt (8) zugeführt wird, in einer jeweiligen y-z Ebene im Bereich kleiner Durchmesser kleiner ist, als im Bereich der größeren Durchmesser.

3. Verfahren nach Anspruch 1 und 2, **dadurch gekennzeichnet, dass** dem Prozessraum (5) über den Umfang der kreisförmigen Ringspalte (7) und (8) das Fluidisierungsmittel einstellbar mit gleicher oder, über den Umfang gesehen, mit unterschiedlicher Gasgeschwindigkeit und/oder Gasmenge und/oder Gastemperatur zugeführt wird.

4. Verfahren nach Anspruch 1 bis 3, **dadurch gekennzeichnet, dass** dem Prozessraum (5) das zu behandelnde Material in den äußeren Bereich des über den äußeren Ringspalt (7) zugeführten Gasstroms zugeführt wird.

5. Verfahren nach Anspruch 1 bis 4, **dadurch gekennzeichnet, dass** das dem Prozessraum (5) zugeführte Material den Prozessraum (5) kreisringförmig bezogen auf eine y-z Ebene bis zu einem Feststoffaustrag (13) oder (18) durchläuft.

6. Vorrichtung zur Behandlung von feinkörnigem Material in einem Verfahren gemäß der Ansprüche 1 bis 5 in einem Strahlschichtapparat, mit einem zylindrischen und nach unten konisch ausgebildeten Prozessraum, in dem von unten eine Gaszuführung für ein Fluidisierungsmittel mündet, wobei in dem unteren Bereich des Prozessraums (5) zentral ein Verdrängungskörper (2) und eine ringförmige Mittelkoritur (9) derart angeordnet sind, dass zwischen dem Verdrängungskörpers (2) und der Innenkontur der ringförmigen Mittelkontur (9) ein innerer Ringspalt (8) und zwischen der Außenkontur der ringförmigen Mittelkontur (9) und der unteren Außenkante des Prozessraums (5) ein äußerer Ringspalt (7) zur Zuführung des Fluidisierungsmittels gebildet wird, und dass die ringförmige Mittelkontur (9) und der Verdrängungskörper (2) durch jeweils eine Verstelleinrichtung in der x-Achse zur Einstellung der Größe eines Spaltes (7') und (8') verstellbar sind.

7. Vorrichtung nach Anspruch 6, **dadurch gekennzeichnet, dass** der Verdrängungskörper (2) in Richtung des Prozessraums (5) sich konisch verengend ausgebildet ist.

8. Vorrichtung nach Anspruch 6 bis 7, **dadurch gekennzeichnet, dass** unterhalb des Prozessraumes (5) eine Zuluftkammer (1) angeordnet ist.

9. Vorrichtung nach Anspruch 6 bis 8, **dadurch gekennzeichnet, dass** in der konischen Außenkontur (14) des Prozessraums (5) ein Feststoffeintrag (6) und ein Feststoffaustrag (12) angeordnet sind.

10. Vorrichtung nach Anspruch 6 bis 9, **dadurch gekennzeichnet, dass** unterhalb der Ringspalte (7) und (8) die Zuluftkammer (1) derart mit Trennwänden versehen sind, dass dem Prozessraum (5) über den Umfang der kreisförmigen Ringspalte (7) und (8) das Fluidisierungsmittel einstellbar mit gleicher oder, über den Umfang gesehen, mit unterschiedlicher Gasgeschwindigkeit und/oder Gasmenge und/oder Gastemperatur zugeführt wird.

11. Vorrichtung nach Anspruch 6 bis 10, **dadurch gekennzeichnet, dass** innerhalb des Prozessraumes (5) eine Trennwand (17) angeordnet ist, die sich von der äußeren Innenwand des Prozessraums (5) bis zur Kontur des Verdrängungskörpers (2) erstreckt.

12. Vorrichtung nach Anspruch 6 bis 11, **dadurch gekennzeichnet, dass** in der ringförmigen Mittelkontur (9) ein oder mehrere Feststoffausträge (18) und ein oder mehrere in den Prozessraum (5) sprühende Sprühdüsen (11) angeordnet sind.

13. Vorrichtung nach Anspruch 6 bis 12, **dadurch gekennzeichnet, dass** innerhalb des Prozessraums (5) die konische Innenwand (14) und/oder die konische Kontur (13) des Verdrängungskörpers (2) und/oder die in den Prozessraum (5) ragende Mittelkontur (9) mit Leiteinrichtungen versehen sind.

14. Vorrichtung nach Anspruch 6 bis 13, **dadurch gekennzeichnet, dass** in dem Prozessraum (5) ein oder mehrere von oben auf das in dem Prozessraum (5) befindlichen Material sprühende Flüsskeitseindüsungen (4) angeordnet sind.

15. Vorrichtung nach Anspruch 6 bis 14, **dadurch gekennzeichnet, dass** in der Außenwandung des Prozessraums (5) ein oder mehrere von der Seite auf das in dem Prozessraum (5) befindliche Material sprühende Düsen angeordnet sind.

## Claims

1. Method for the treatment of fine-grained material in a spouted bed, in which a fluidizing agent is fed from below to a process chamber which is designed to be cylindrical and conical towards the bottom in order to produce and maintain a spouted bed,
wherein, in the process chamber (5), a gas flow of the fluidizing agent that is virtually annular and of which the diameter widens towards the outside in the direction of the x-axis in the process chamber (5) is produced via an outer annular gap (7) lying in the y-z plane, and a gas flow of the fluidizing agent that is virtually annular and of which the diameter widens towards the inside in the direction of the x-axis in the process chamber (5) is produced via an inner annular gap (8) lying in the y-z plane, where the material to be treated in the process chamber (5) is sprayed from above and/or from below and/or from the side at one or more points by injection with a liquid, and where the inflow direction of the gas flow fed in via the outer (7) and inner (8) annular gap is adjustable by adjusting a gap width, wherein an annular central contour (9) and a displacement body (2) can be displaced in the x-axis by a respective displacement device in order to adjust the size of a gap (7') and (8').

2. Method according to Claim 1, **characterized in that** the gas velocity of the gas flows which are formed annularly and which are fed in via the outer annular gap (7) is greater in the region of smaller diameter in a respective y-z plane than in the region of the larger diameter, and the gas velocity of the gas flows which are formed annularly and which are fed in via the inner annular gap (8) is smaller in the region of smaller diameter in a respective y-z plane than in the region of the larger diameter.

3. Method according to Claim 1 and 2, **characterized in that** the fluidizing agent is fed to the process chamber (5) via the circumference of the circular annular gaps (7) and (8) adjustably with the same gas velocity or, viewed over the circumference, with a different gas velocity and/or gas volume and/or gas temperature.

4. Method according to Claim 1 to 3, **characterized in that** the material to be treated is fed to the process chamber (5) in the outer region of the gas flow fed in via the outer annular gap (7).

5. Method according to Claim 1 to 4, **characterized in that** the material fed to the process chamber (5) passes through the process chamber (5) annularly in relation to a y-z plane as far as a solids outlet (13) or (18).

6. Apparatus for the treatment of fine-grained material in a method according to Claims 1 to 5 in a spouted bed apparatus, having a process chamber which is designed to be cylindrical and conical towards the bottom, in which a gas feed for a fluidizing agent opens from below, wherein, in the lower region of the process chamber (5), a displacement body (2) and an annular central contour (9) are arranged centrally in such a way that an inner annular gap (8) is formed between the displacement body (2) and the inner contour of the annular central contour (9), and an outer annular gap (7) for feeding in the fluidizing agent is formed between the outer contour of the annular central contour (9) and the lower outer edge of the process chamber (5), and that the annular central contour (9) and the displacement body (2) can be displaced in the x-axis by a respective displacement device in order to adjust the size of a gap (7') and (8').

7. Apparatus according to Claim 6, **characterized in that** the displacement body (2) is designed to narrow conically in the direction of the process chamber (5).

8. Apparatus according to Claim 6 to 7, **characterized in that** a feed air chamber (1) is arranged underneath the process chamber (5).

9. Apparatus according to Claim 6 to 8, **characterized in that** a solids inlet (6) and a solids outlet (12) are arranged in the conical outer contour (14) of the process chamber (5).

10. Apparatus according to Claim 6 to 9, **characterized in that**, underneath the annular gaps (7) and (8), the feed air chamber (1) is provided with partitions in such a way that the fluidizing agent is fed to the process chamber (5) via the circumference of the circular annular gaps (7) and (8) adjustably with the same gas velocity or, viewed over the circumference, with a different gas velocity and/or gas volume and/or gas temperature.

11. Apparatus according to Claim 6 to 10, **characterized in that** within the process chamber (5) there is arranged a partition (17), which extends from the outer inner wall of the process chamber (5) as far as the contour of the displacement body (2).

12. Apparatus according to Claim 6 to 11, **characterized in that** in the annular central contour (9) there are arranged one or more solids outlets (18) and one or more spray nozzles (11) spraying into the process chamber (5).

13. Apparatus according to Claim 6 to 12, **characterized in that**, within the process chamber (5), the conical inner wall (14) and/or the conical contour (13) of the displacement body (2) and/or the central contour (9) projecting into the process chamber (5) are provided with guide devices.

14. Apparatus according to Claim 6 to 13, **characterized in that** in the process chamber (5) there are arranged one or more fluid injectors (4) spraying from above onto the material in the process chamber (5).

15. Apparatus according to Claim 6 to 14, **characterized in that** in the outer wall of the process chamber (5) there are arranged one or more nozzles spraying from the side onto the material in the process chamber (5).

## Revendications

1. Procédé de traitement d'une matière à grain fin dans une couche fluidisée, lors duquel on amène produit de fluidisation par le bas vers un espace de processus cylindrique et conçu en forme conique vers le bas pour générer et pour maintenir une couche fluidisée, dans l'espace de processus (5), par l'intermédiaire d'une fente annulaire (7) extérieure se situant dans le plan y-z étant générée une circulation gazeuse du produit de fluidisation, approximativement en forme d'anneau de cercle et dont le diamètre s'élargit vers l'extérieur dans l'espace de processus (5), dans la direction de l'axe x, et par l'intermédiaire d'une fente annulaire (8) intérieure, se situant dans le plan y-z étant générée une circulation gazeuse du produit de fluidisation approximativement en forme d'anneau de cercle et dont le diamètre s'élargit vers l'intérieur, dans l'espace de processus (5), dans la direction de l'axe x, la matière à traiter étant vaporisée dans l'espace de processus (5) à partir du haut et/ou à partir du bas et/ou par le côté, sur un ou sur plusieurs endroits par injection avec un liquide et la direction d'affluence de la circulation gazeuse amenée par l'intermédiaire de la fente annulaire extérieure (7) et intérieure (8) étant réglable par réglage d'une largeur de fente, un contour médian (9) annulaire et un corps de refoulement (2) étant ajustables par chaque fois un système d'ajustage dans l'axe x, pour le réglage de la taille d'une fente (7') et (8').

2. Procédé selon la revendication 1, **caractérisé en ce que**, dans un plan y-z respectif, la vitesse du gaz de la circulation gazeuse conçue en forme d'anneau conique, qui est amenée par l'intermédiaire de la fente annulaire (7) extérieure, est supérieure dans la zone des petits diamètres à celle dans la zone des plus grands diamètres et, dans un plan y-z respectif, la vitesse du gaz de la circulation gazeuse conçue en forme d'anneau conique, qui est amenée par l'intermédiaire de la fente annulaire (8) intérieure est inférieure dans la zone de petits diamètres à celle dans la zone de plus grands diamètres.

3. Procédé selon la revendication 1 et 2, **caractérisé en ce que** par l'intermédiaire de la circonférence des fentes annulaires (7) et (8) en forme de cercles, le produit de fluidisation est amené vers l'espace de processus (5) de manière réglable avec une vitesse, quantité et/ou température de gaz identiques ou différentes, vu sur la circonférence.

4. Procédé selon la revendication 1 à 3, **caractérisé en ce que** la matière à traiter est amenée vers l'espace de processus (5) dans la zone extérieure du flux gazeux amené par l'intermédiaire de la fente annulaire (7) extérieure.

5. Procédé selon la revendication 1 à 4, **caractérisé en ce que** la matière amenée vers l'espace de processus (5) traverse l'espace de processus (5) en forme d'anneau de cercle en rapport à un plan y-z jusqu'à une sortie (13) ou (18) de matière solide.

6. Dispositif destiné au traitement d'une matière à grain fin dans un procédé selon l'une quelconque des revendications 1 à 5, dans un appareil à couche fluidisée avec un espace de processus cylindrique et conçu de forme conique vers le bas, dans lequel débouche par le bas une alimentation de gaz pour un produit de fluidisation, dans la zone inférieure de l'espace de processus (5), de manière centrale, un corps de refoulement (2) et un contour médian (9) de forme annulaire étant placés de telle sorte qu'entre le corps de refoulement (2) et le contour interne du contour médian (9) de forme annulaire, il se forme une fente annulaire (8) intérieure et entre le contour externe du contour médian (9) de forme annulaire et l'arête extérieure inférieure de l'espace de processus (5), il se forme une fente annulaire (7) extérieure pour l'alimentation du produit de fluidisation et en ce que le contour médian (9) de forme annulaire et le corps de refoulement (2) sont ajustables par chaque fois un système d'ajustage dans l'axe x, pour le réglage de la taille d'une fente (7') et (8').

7. Dispositif selon la revendication 6, **caractérisé en ce que** le corps de refoulement (2) est conçu en se rétrécissant en forme conique dans la direction de l'espace de processus (5).

8. Dispositif selon la revendication 6 à 7, **caractérisé en ce qu'**en-dessous de l'espace de processus (5) est placée une chambre d'alimentation d'air (1).

9. Dispositif selon la revendication 6 à 8, **caractérisé en ce que** dans le contour externe (14) conique de l'espace de processus (5) sont placés une entrée (6) de matière solide et une sortie (12) de matière solide.

10. Dispositif selon la revendication 6 à 9, **caractérisé en ce qu'**en-dessous des fentes annulaires (7) et (8), les chambres d'alimentation d'air (1) sont munies de parois de séparation de telle sorte que par l'intermédiaire des fentes annulaires (7) et (8) de forme circulaire, le produit de fluidisation est amené vers l'espace de processus (5) de manière réglable, avec une vitesse, quantité et/ou température de gaz identiques ou différentes, vu sur la circonférence.

11. Dispositif selon la revendication 6 à 10, **caractérisé en ce qu'**à l'intérieur de l'espace de processus (5) est placée une paroi de séparation (17) qui s'étend de la paroi interne extérieure de l'espace de processus (5) jusqu'au contour du corps de refoulement (2).

12. Dispositif selon la revendication 6 à 11, **caractérisé en ce que** dans le contour médian (9) de forme annulaire sont placées une ou plusieurs sorties (18) de matière solide et une ou plusieurs buses de pulvérisation (11) vaporisant dans l'espace de processus (5).

13. Dispositif selon la revendication 6 à 12, **caractérisé en ce qu'**à l'intérieur de l'espace de processus (5), la paroi interne (14) conique et/ou le contour (13) conique du corps de refoulement (2) et/ou le contour médian (9) saillant dans l'espace de processus (5) sont munis de systèmes de guidage.

14. Dispositif selon la revendication 6 à 13, **caractérisé en ce que** dans l'espace de processus (5) sont placées une ou plusieurs injections (4) de liquide vaporisant par le dessus la matière qui se trouve dans l'espace de processus (5).

15. Dispositif selon la revendication 6 à 14, **caractérisé en ce que** dans la paroi extérieure de l'espace de processus (5) sont placées une ou plusieurs buses vaporisant par le côté la matière qui se trouve dans l'espace de processus (5).
